# EUROPÄISCHE PATENTSCHRIFT

(11) **EP 1 078 281 B1**
(45) Veröffentlichungstag und Bekanntmachung des Hinweises auf die Patenterteilung: **06.11.2002**
(21) Anmeldenummer: 99912964.6
(22) Anmeldetag: 16.04.1999
(51) Int. Cl.: G01S 17/10, G01S 7/487

(54) **VERFAHREN ZUR OPTISCHEN ENTFERNUNGSMESSUNG**
METHOD FOR OPTICALLY MEASURING DISTANCE
PROCEDE DE MESURE OPTIQUE DES DISTANCES

(30) Priorität: 19.05.1998 AT 85498
(43) Veröffentlichungstag der Anmeldung: 28.02.2001
(73) Patentinhaber: Perger, Andreas, 1180 Wien (AT)
(72) Erfinder: Perger, Andreas, 1180 Wien (AT)
(74) Vertreter: Weiser, Andreas, Dipl.-Ing.
(86) Internationale Anmeldenummer: AT9900095
(87) Internationale Veröffentlichungsnummer: WO99060419

(56) Entgegenhaltungen:
- EP-A- 0 437 417
- EP-A- 0 805 359
- WO-A-88/05922
- WO-A-96/12203
- DE-A- 4 133 196

## Beschreibung

Die vorliegende Erfindung betrifft ein Verfahren zum Messen der Entfernung zwischen einem Standort und einem Objekt mittels optischer Impulslaufzeitmessung, mit den Schritten:
a) Aussenden eines Lichtimpulses vom Standort zu einem gewählten Sendezeitpunkt,
b) zeitdiskretes Abtasten der am Standort empfangenen Lichtintensität und im Abtasttakt fortlaufendes Abspeichern der Abtastwerte über ein vorgewähltes, den Empfangszeitpunkt des vom Objekt reflektierten Lichtimpulses mindestens einschließendes Meßzeitfenster, als Empfangssignal-Abtastwertsatz,
c) N-faches Wiederholen der Schritte a) und b), um N abgespeicherte Empfangssignal-Abtastwertsätze zu erhalten,
d) Summieren der N abgespeicherten Empfangssignal-Abtastwertsätze abtastwertweise zu einem Summen-Abtastwertsatz während eines an die N Meßzeitfenster anschließenden Rechenzeitfensters.
Durch das Aufsummieren von N Empfangssignal-Abtastwertsätzen verbessert sich das Signal/Rausch-Verhältnis des Empfangssignales proportional der Wurzel aus N. Im Summensignal wird das Echo (die Reflexion) des Lichtimpulses gesucht, und aus der Position des Echos kann an Hand der bekannten Beziehung Entfernung = (Abtastwertnummer des Echos x Taktimpulsperiode x Lichtgeschwindigkeit)/2 die Entfernung ermittelt werden.

Das geschilderte Prinzip der Signal/Rausch-Verhältnisverbesserung ist seit langem bekannt und beispielsweise in Optical and Quantum Electronics, Band 7, Nr. 3, 1975, Seiten 179/185 beschrieben. Der Nachteil des bekannten Verfahrens besteht darin, daß beispielsweise für eine Erhöhung des Signal/Rausch-Verhältnisses um das 10-fache 100 Empfangssignal-Abtastwertsätze zu z.B. 1000 Abtastwerten gespeichert werden müssen, was dementsprechend 100 000 Speicherplätze erfordert.

Anderseits ist z.B. aus der EP 0 312 524 eine zweite Gruppe von optischen Distanzmeßverfahren bekannt, bei welchen der Summen-Abtastwertsatz in Echtzeit während der Abtastung berechnet wird. Jeder Abtastwert wird im Takt der Abtastfrequenz fortlaufend zu dem bereits vorhandenen entsprechenden Abtastwert hinzuaddiert. Der dafür notwendige Speicher benötigt zwar lediglich (beim genannten Beispiel) 1000 Zellen, jedoch muß eine beachtliche Rechenleistung vorhanden sein, da für das Addieren von zwei Werten bei einer üblichen Abtastfrequenz von z.B. 20 MHz nur wenige Nanosekunden zur Verfügung stehen. Dazu benötigt man entweder leistungsfähige, kundenspezifische integrierte Schaltkreise (ASICs) oder digitale Signalprozessoren, was den Aufbau entsprechender Schaltungen ebenso verteuert wie die großen Speicherbausteine der ersten Gruppe von Verfahren.

Darüber hinaus kann in der Praxis der Zeitgewinn durch die Echtzeitverarbeitung nicht realisiert werden, da die Impulswiederholrate von üblichen Laserdioden sowohl aus thermischen Gründen als auch aus Gründen der Augensicherheit größenordnungsmäßig auf etwa 10 kHz begrenzt ist. Die Zeit zwischen der Beendigung eines Abtastvorganges (bei einer Distanz von z.B. 1000 m sind dies etwa 6,6 µs nach Aussendung des Laserimpulses) und dem Aussenden des nächsten Laserimpulses bleibt in der Praxis ungenützt.

Die Erfindung setzt sich daher zum Ziel, ein Verfahren zur Entfernungsmessung nach der optischen Impulslaufzeitmethode mit Signal/Rausch-Verhältnisverbesserung durch Empfangssignalsummation zu schaffen, das mit einfacheren und kostengünstigeren schaltungstechnischen Mitteln realisierbar ist als die bekannten Verfahren, und das eine Messung in einer kurzen Zeitspanne bei Beachtung der Betriebsbeschränkungen üblicher Lichtimpulserzeuger ermöglicht. Dieses Ziel wird mit einem Verfahren der einleitend genannten Art erreicht, das die weiteren Schritte aufweist:
e) Wiederholen der Schritte a) bis d), um einen weiteren Summen-Abtastwertsatz zu erhalten,
   wobei im oder nach dem Schritt d) der weitere Summen-Abtastwertsatzes zu dem vorhandenen Summen-Abtastwertsatz abtastwertweise hinzuaddiert wird, um letzteren zu aktualisieren, und
   wobei ein allfälliger Gleichanteil eines Summen-Abtastwertsatzes vor und/oder nach der genannten Hinzuaddierung von diesem subtrahiert wird,
f) Suchen signifikanter, ein vorgegebenes Schweilwertkriterium erfüllender Abtastwerte im Summen-Abtastwertsatz,
g) sooftmaliges Wiederholen der Schritte e) und f), bis signifikante Abtastwerte gefunden werden, und
h) Ermitteln der gesuchten Entfernung aus der Position der gefundenen signifikanten Abtastwerte im Summen-Abtastwertsatz.
Auf diese Weise werden zeitlich beabstandete Impulspakete aus aufeinanderfolgenden Einzelimpulsen ausgesandt. Die Empfangssignal-Abtastwertsätze der Einzelimpulsewerden während der Abtastung nur gespeichert und erst nach einem beendeten Paket summiert. Die Summen-Abtastwertsätze aufeinanderfolgender Impulspakete werden hingegen in den Pausen zwischen den Impulspaketen summiert.

Die Erfindung beruht auf der Erkenntnis, daß übliche Lichtimpulserzeugungseinrichtungen, wie Laserdioden, paketweise gepulst betrieben werden können, wobei zwischen den Impulspaketen ausreichend Zeit für "langsame" Rechenoperationen zur Verfügung steht, so daß einfache, kostengünstige Mikroprozessoren zur schaltungstechnischen Realisierung genügen. In den einzelnen Impulspaketen müssen nur wenige Empfangssignalsätze gespeichert werden, so daß keine großen Speichereinrichtungen erforderlich sind. Darüber hinaus verringert die nach jedem Impulspaket erfolgende Reduzierung der Summen-Abtastwertsätze um deren Gleichanteile die Bitbreite der abzuspeichernden Abtastwertsätze, so daß der Speicher nur eine geringe Speichertiefe aufzuweisen braucht.

An Hand praktischer Versuche, die später noch ausführlich erläutert werden, hat sich gezeigt, daß ein besonders vorteilhafter Kompromiß zwischen den genannten gegensätzlichen Anforderungen erzielt wird, wenn gemäß einem bevorzugten Merkmal der Erfindung das Rechenzeitfenster das 4- bis 16-fache, bevorzugt etwa das 8- bis 10-fache, von N Meßzeitfenstern ist.

Eine erhöhte Auflösung kann erzielt werden, wenn bevorzugt im Schritt h) als Position der Schwerpunkt der signifikanten Abtastwerte verwendet wird.

Besonders vorteilhaft ist es ferner, wenn in den Schritten f) bis h) bei mehreren voneinander beabstandeten Gruppen von signifikanten Abtastwerten eine erste Gruppe, die deutlich breiter als die nächste Gruppe ist, nicht berücksichtigt wird. Dadurch kann das Zielecho von einem Echo zufolge Sichtbehinderung unterschieden werden, welches im Nahbereich auftritt und typischerweise breiter als das Zielecho ist.

Um zu vermeiden, daß beim Messen eines Objektes vor einem Hintergrund dieser die Messung verfälscht, wird bevorzugt vorgesehen, daß in den Schritten f) bis h) bei mehreren voneinander beabstandeten Gruppen von signifikanten Abtastwerten die letzte(n) Gruppe(n) nicht berücksichtigt wird/werden.

Die Erfindung wird nachstehend an Hand eines Ausführungsbeispieles unter Bezugnahme auf die begleitenden Zeichnungen näher beschrieben, in denen
Fig. 1 ein Blockschaltbild einer zur Durchführung des Verfahrens geeigneten Vorrichtung zeigt, und die
Fig. 2a bis 2d Zeitdiagramme (im weiteren auch "Histogramme" genannt) von während des Verfahrens auftretenden Abtastwertsätzen zeigen.

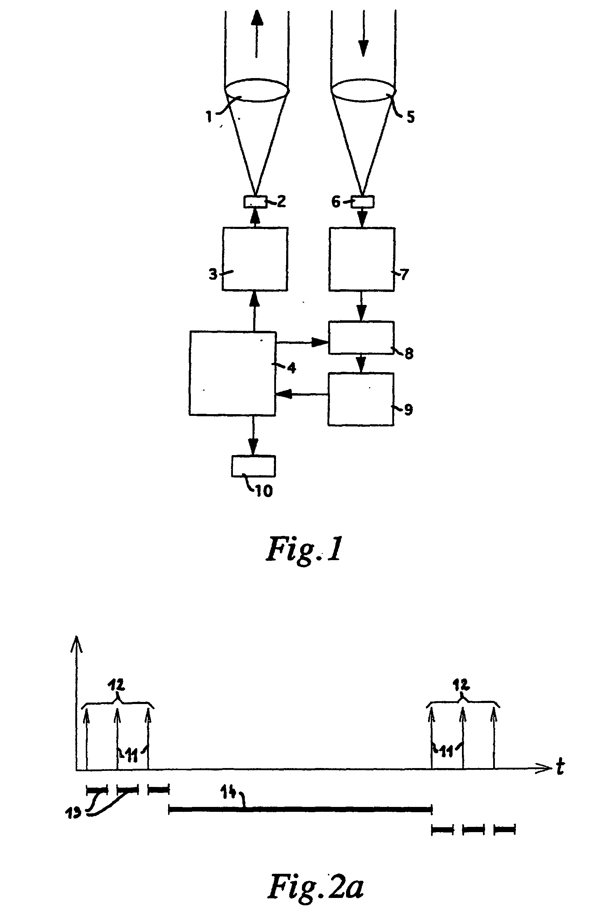

In Fig. 1 ist der grundsätzliche Aufbau eines Distanzmessers gezeigt, welcher zur Durchführung des Verfahrens verwendet werden kann. Ein Lasertreiber 3, der von einem Mikroprozessor 4 getriggert wird, erzeugt kurze elektrische Impulse, welche von einer Laserdiode 2 in Lichtimpulse verwandelt werden. Die Dauer der Impulse liegt typischerweise im Bereich von einigen 10 ns. Die von der Laserdiode 2 in einem Raumwinkel abgestrahlten Lichtimpulse werden von einem Sendeobjektiv 1 in einen annähernd parallelen Strahl umgeformt, welcher auf ein Objekt (nicht gezeigt) gerichtet wird. Da das Objekt im allgemeinen diffus reflektiert, wird ein kleiner Bruchteil der ausgesendeten Lichtmenge in Richtung eines Empfangsobjektivs 5 zurückgeworfen.

Das vom Objektiv 5 empfangene Lichtsignal besteht aus Lichtimpulsen, welche eine ähnliche Form wie die ausgesendeten Lichtimpulse haben (soferne das Zielobjekt nicht sehr ausgedehnt ist), jedoch wesentlich schwächer und um ein Zeitintervall T verzögert sind, das der Laufzeit des Lichtes vom Sender zum Zielobjekt und vom Zielobjekt zum Empfänger entspricht. Da Sender und Empfänger im Vergleich zum Zielabstand sehr nahe beieinander angeordnet sind, errechnet sich der Objektabstand zu s = T*c/2, wobei c die Lichtgeschwindigkeit in Luft ist.

Das Empfangsobjektiv 5 fokussiert die zurückgeworfenen Lichtimpulse auf eine Photodiode 6. Der erzeugte Photostrom wird von einem Verstärker 7 auf einen Pegel verstärkt, der von einem nachfolgenden A/D-Konverter 8 verarbeitet werden kann. Das Ausgangssignal besteht nicht nur aus den von den Lichtimpulsen herrührenden elektrischen Impulsen, die zur Bestimmung der Objektdistanz herangezogen werden sollen, sondern auch aus Rauschen, welches vom Verstärker 7 sowie von der Photodiode 6 herrührt.

Wegen der begrenzten Spitzenleistung heute verfügbarer Laserdioden kann bei großen Objektentfernungen die Impuisamplitude sogar kleiner als das Rauschen sein (Signal/Rausch-Verhältnis kleiner 1). Aus diesem Grunde wird das folgende Verfahren angewendet.

Gleichzeitig mit der Aussendung eines Laserimpulses wird die Abtastung des Empfangssignales (Ausgangssignal des Verstärkers 7) mittels des A/D-Konverters 8 gestartet. Dieser tastet mit einer Frequenz von z.B. einigen 10 MHz ab. Jeder Abtastwert entspricht einem Distanzfenster von einigen Metern. Es werden so viele Abtastwerte aufgenommen, wie es der gewünschten Maximaldistanz entspricht. Die Abtastwerte werden in einem Speicher als Abtastwertsatz abgelegt. Danach wird wieder ein Laserimpuls ausgesendet und der Abtastvorgang durchgeführt. Wiederum wird ein Abtastwertsatz gespeichert.

Es werden auf diese Weise Impulspakete zu beispielsweise 16 Impulsen ausgesendet und 16 Abtastwertsätze gespeichert. Anschließend werden alle 16 Abtastwertsätze Abtastwert für Abtastwert (= abtastwertweise) zu einem Summen-Abtastwertsatz summiert. Da bei 16 Impulsen und einer Auflösung des A/D-Konverters von 4 Bit die Summenwerte höchstens 8 Bit aufweisen können, reicht für die Summation und die Aufnahme des Summen-Abtastwertsatzes eine Rechen- und Speichertiefe von 8 Bit.

16 Impulse können sowohl von der Augensicherheit her als auch bezüglich der Belastung des Lasers in der Praxis mit einer Pulsfolgefrequenz bis zu etwa 100 kHz ausgesendet werden, wodurch wenig Zeitverlust entsteht. Nach einem Impulspaket steht genügend Zeit zur Summation zur Verfügung, wofür ein einfacher Mikroprozessor reicht.

Der Suzammen-Abtastwertsatz wird nun auf ein signifikantes Signal, das dem Echo eines Lichtimpulses entsprechen könnte, untersucht. Dies erfolgt beispielsweise durch Kreuzkorrelation mit der ursprünglichen Lichtimpulsform und Schwellwertvergleich des Korrelationsergebnisses, oder durch bloßen Schwellwertvergleich der Abtastwerte oder benachbarter Abtastwertgruppen; jedenfalls müssen signifikante Abtastwerte ein bestimmtes Schwellwertkriterium erfüllen.

Bei Auffinden von signifikanten Abtastwerten im Summen-Abtastwertsatz wird die Entfernungsmessung abgebrochen, was eine vorteilhaft niedrige Meßzeit und einen geringen Energieverbrauch ergibt.

Sind keine signifikanten Abtastwerte auffindbar, d.h. kein ausreichendes Signal/Rausch-Verhältnis vorhanden, ist auch die Speichertiefe nicht ausgenutzt worden und es wird vom Summen-Abtastwertsatz ein solcher Wert von allen Abtastwerten abgezogen, daß der kleinste Summen-Abtastwert Null beträgt. Der abzuziehende Wert wird im folgenden als "Offset" bzw. "Gleichanteil" bezeichnet. Dabei kann es sich auch, um einen Gleichanteil im mathematischen Sinne handeln.

Nun wird das nächste Impulspaket ausgesendet und wie oben verfahren. Wiederum wird vom Summen-Abtastwertsatz ein Offset abgezogen, damit die erforderliche Speichertiefe möglichst gering bleibt. Der Summen-Abtastwertsatz wird zu jenem des vorherigen Impulspaketes addiert und diesen ersetzend abgespeichert. Gegebenenfalls wird wieder ein Offset abgezogen. Der derart "aktualisierte" Summen-Abtastwertsatz wird wieder auf das Vorhandensein signifikanter Abtastwerte untersucht.

Dieses Verfahren wird wiederholt, bis ein ausreichendes Signal/Rausch-Verhältnis vorliegt, höchstens aber z.B. 256 mal, was zu einer Gesamtimpulszahl von rund 4000 Impulsen führt. Durch das Abziehen eines Offset kann der Summen-Abtastwertsatz stets im Rahmen von 8 Bit gehalten werden, soferne die Auflösung in Bezug auf die Rauschamplitude richtig gewählt wurde.

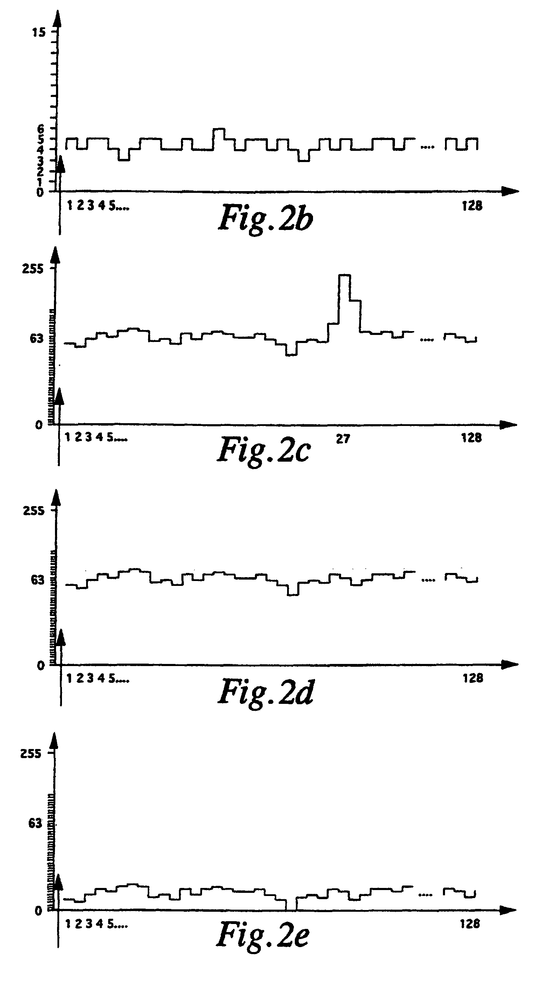

Ein Verfahrensbeispiel mit konkreten Zahlenwerten wird an Hand von Fig. 2 im Anschluß erläutert.

### Beispiel

Fig. 2a zeigt schematisch den Zeitablauf der Aussendung von Laserimpulsen über der Zeit t.

Pro Impulspaket 12 wurden 16 Laserimpulse 11 ausgesandt, wobei jeweils nur die ersten drei gezeigt sind. Die Aussenderate der Laserimpulse 11 in einem Impulspaket 12 betrug 100 kHz, der Abstand der Laserimpulse 11 somit 10 µs.

Nach jedem Laserimpuls 11 wurde das Empfangssignal während eines Meßzeitfensters 13 mit 20 MHz abgetastet. Jeder Abtastwert entsprach daher 50 ns oder 7,5 m. Es wurden 128 Abtastwerte in einem Abtastwertsatz gespeichert, was somit einem Meßzeitfenster 13 von 6,4 µs (gleichbedeutend mit einer maximalen Distanz von 960 m) entsprach.

Nach 16 Lichtimpulsen 11 wurde etwa 1,44 ms lang pausiert, und anschließend das nächste Impulspaket 12 ausgesandt. Im zeitlichen Mittel wurden daher 16 Lichtimpulse pro 1,6 ms ausgesendet, was einer mittleren Wiederholrate von 10 kHz entsprach, ein akzeptabler Wert für übliche Laserdioden.

Die Pausenzeit zwischen den Impulspaketen 12 wurde als Rechenzeit 14 für die Aufsummierung der 16 Abtastwertsätze eines Impulspaketes 12 zu einem Summen-Abtastwertsatz verwendet. Das Rechenzeitfenster 14 betrug etwa das 8 bis 10-fache des Meßzeitfensters 13.

Fig. 2b zeigt das Zeitdiagramm (Histogramm) des ersten Abtastwertsatzes nach dem ersten Laserimpuls 11. Es war kein Echo von einem Zielobjekt zu sehen. (Bei geringer Entfernung und dadurch großen Signalen könnte schon nach einem Impuls ein Signal sichtbar sein.) Die Verstärkung des Verstärkers 7 wurde so gewählt, daß die Standardabweichung des Rauschens ca. 0,5 LSB (least signifikant bit) betrug. Der Offset wurde mit ca. 4 LSB gewählt.

Fig. 2c zeigt den Summen-Abtastwertsatz nach dem ersten Impulspaket 12. Der Offset (Gleichanteil, Mittelwert) war auf 16 · 4 = 64 LSB angewachsen, die Standardabweichung des Rauschens auf ca. 0,5 · √16 = 2 LSB. Das Signal war um den Faktor 16 gestiegen, das Signal/Rausch-Verhältnis um den Faktor 4. Bei einem Summen-Abtastwertsatz wie in Fig. 2c dargestellt würde die Distanzmessung abgebrochen und die Distanz = 27 · 7,5 m = 292,5 m angezeigt werden (Echo bei Abtastwert 27).

Fig. 2d zeigt einen Summen-Abtastwertsatz ohne ausreichend starkes Echosignal nach dem ersten Impulspaket. Es wurde ein Offset abgezogen (Fig. 2e).

Nach Summation über 256 Impulspakete 12 mit je 16 Impulsen 11 betrug die Standardabweichung des Rauschens ca. 32 LSB, der Mittelwert war ca. 100 LSB, der Aussteuerbereich für Nutzsignale ca. 150, und das Signal/Rausch-Verhältnis etwa 8. Signal/Rausch-Verhältnisse von etwa 4 bis 5 wären bereits ausreichend. Die gesamte Meßzeit für 4096 Impulse betrug 0,4096 s.

Während jedes Rechenzeitfensters 14 standen 1,4 ms Zeit für 128 · 16 = 2048 Additionen, 128 Subtraktionen für die Offsetkorrektur, sowie weitere 128 Additionen zur Summation zum vorherigen Summen-Abtastwertsatz zur Verfügung. Für jede 8 Bit-Rechenoperation waren somit rund 600 ns verfügbar, wozu verhältnismäßig einfache Rechner genügten. Der Speicherbedarf betrug 16 · 128 4-Bit-Speicherplätze, also 1024 Byte plus 128 Byte für den Summen-Abtastwertsatz.

Zum Vergleich benötigt ein Verfahren der einleitend genannten ersten Gruppe einen Speicher von 128 · 4096 4-Bit-Speicherplätzen, also mehr als 260 kByte. An die Impulsaussendungszeit von 0,4 s schließt sich die Auswertezeit an. Die Additionen erfolgen in 16 Bit-Technik. Verfahren der einleitend genannten zweiten Gruppe gehen mit Speicher und Auswertezeit zwar ähnlich um wie das hier beschriebene Verfahren, für jede 16 Bit-Addition stehen jedoch nur 50 ns zur Verfügung.

Eine Verfeinerung des vorgestellten Verfahrens ist dadurch möglich, daß nicht nur untersucht wird, bei welchem Abtastwert des Summen-Abtastwertsatzes das höchste Summensignal auftritt, sondern daß die Signalform so gewählt wird, daß das Echosignal z.B. 2 bis 3 Abtastwerte überstreicht und durch Bildung des Schwerpunktes eine erhöhte Auflösung erzielt wird.

Weiters kann das Zielobjektecho von einem Echo zufolge Sichtbehinderung dadurch unterschieden werden, daß letzteres typischerweise im Nahbereich auftritt und deutlich breiter ist (beispielsweise 7 oder 8 Abtastwerte breit).

Treten mehrere Zielobjektechos auf, so interessiert in den meisten Fällen nur eines davon. Die übrigen Echos rühren typischerweise von im Vordergrund befindlichen Objekten (Ästen von Bäumen etc.) her, die nicht gemessen werden sollen. Auch beim Messen eines Objektes vor einem Hintergrund könnte irrtümlich dieser mitgemessen werden, insbesondere in größeren Distanzen, wenn der sich unter einem bestimmten Divergenzwinkel öffnende Meßstrahl größer ist als das Meßobjekt. Abhilfe schafft hier eine Histogramminterpretation, bei welcher grundsätzlich das erste von zwei Zielobjekten angezeigt wird, es sei denn, das erste Objekt ist weniger als beispielsweise 100 m entfernt.

## Patentansprüche

1. Verfahren zum Messen der Entfernung zwischen einem Standort und einem Objekt mittels optischer Impulslaufzeitmessung, mit den Schritten:
a) Aussenden eines Lichtimpulses (11) vom Standort zu einem gewählten Sendezeitpunkt,
b) zeitdiskretes Abtasten der am Standort empfangenen Lichtintensität und im Abtasttakt fortlaufendes Abspeichern der Abtastwerte über ein vorgewähltes, den Empfangszeitpunkt des vom Objekt reflektierten Lichtimpulses mindestens einschließendes Meßzeitfenster (13), als Empfangssignal-Abtastwertsatz,
c) N-faches Wiederholen der Schritte a) und b), um N abgespeicherte Empfangssignal-Abtastwertsätze zu erhalten,
d) Summieren der N abgespeicherten Empfangssignal-Abtastwertsätze abtastwertweise jedoch Lampsamer als im Takt der Abtastfrequenz zu einem Summen-Abtastwertsatz während eines an die N Meßzeitfenster (13) anschließenden Rechenzeitfensters (14),
c) Wiederholen der Schritte a) bis d), um einen weiteren Summen-Abtastwertsatz zu erhalten,
wobei im oder nach dem Schritt d) der weitere Summen-Abtastwertsatzes zu dem vorhandenen Summen-Abtastwertsatz abtastwertweise jedoch Lampsamer als im Takt der Abtastfrequenz hinzuaddiert wird, um letzteren zu aktualisieren, und
wobei ein allfälliger Gleichanteil eines Summen-Abtastwertsatzes vor und/oder nach der genannten Hinzuaddierung von diesem subtrahiert wird,
f) Suchen signifikanter, ein vorgegebenes Schwellwertkriterium erfüllender Abtastwerte im Summen-Abtastwertsatz,
g) sooftmaliges Wiederholen der Schritte e) und f), bis signifikante Abtastwerte gefunden werden, und
h) Ermitteln der gesuchten Entfernung aus der Position der gefundenen signifikanten Abtastwerte im Summen-Abtastwertsatz.

2. Verfahren nach Anspruch 1, **dadurch gekennzeichnet, daß** das Rechenzeitfenster (14) das 4- bis 16-fache, bevorzugt etwa das 8- bis 10-fache, von N Meßzeitfenstern (13) ist.

3. Verfahren nach Anspruch 1 oder 2, **dadurch gekennzeichnet, daß** im Schritt h) als Position der Schwerpunkt der signifikanten Abtastwerte verwendet wird.

4. Verfahren nach einem der Ansprüche 1 bis 3, **dadurch gekennzeichnet, daß** in den Schritten f) bis h) bei mehreren voneinander beabstandeten Gruppen von signifikanten Abtastwerten eine erste Gruppe, die deutlich breiter als die nächste Gruppe ist, nicht berücksichtigt wird.

5. Verfahren nach einem der Ansprüche 1 bis 4, **dadurch gekennzeichnet, daß** in den Schritten f) bis h) bei mehreren voneinander beabstandeten Gruppen von signifikanten Abtastwerten die letzte(n) Gruppe(n) nicht berücksichtigt wird/werden.

## Claims

1. A method of measuring the distance between a fixed point and an object by optical pulse delay time measurement, comprising the steps:
a) transmitting a light pulse (11) from the fixed point at a selected instant of transmission,
b) time-discrete sampling of the light intensity received at the fixed point and continuously storing, at the sampling rate, as a received signal sample set, the samples during a predetermined measuring time window (13) embracing the instant of reception of the light pulse reflected from the object,
c) repeating steps a) and b) N number of times in order to obtain N received signal sample sets,
d) summing the N stored received signal sample sets, sample by sample but at a rate more slowly than the sampling rate, to a summed sample set during a calculating time window (14) following the N measuring time windows (13),
e) repeating steps a) through d) in order to obtain a further summed sample set,
whereby during or following step d) the further summed sample set is added, sample by sample set but at a rate more slowly than the sampling rate, to the present summed sample set to update the latter, and
whereby an eventual offset of a summed sample set is subtracted therefrom before and/or after said adding,
f) searching within the summed sample set for significant samples which satisfy a predetermined threshold criterion,
g) repeating steps e) and f) until significant samples have been detected, and
h) determining the looked-for distance from the position of the detected significant sample in the summed sample set.

2. The method according to claim 1, **characterized by** the fact that the calculating time window (14) is 4 to 16, preferably about 8 to 10 times the N measuring time windows (13).

3. The method according to claim 1 or 2, **characterized by** the fact that in step h) the point of gravity of the significant samples is used as the position.

4. The method according to one of claims 1 to 3, **characterized by** the fact that in case of several groups of significant samples separated from each other a first group which is noticeably wider than the next group is not considered in steps f) to h).

5. The method according to one of claims 1 to 4, **characterized by** the fact that in case of several groups of significant samples separated from each other the last group or groups is/are not considered in steps f) through h).

## Revendications

1. Procédé destiné à mesurer la distance entre un lieu et un objet au moyen de la mesure de la durée d'impulsion optique, comportant les étapes consistant à :
a) émettre une impulsion lumineuse (11) depuis le lieu à un instant d'émission choisi,
b) balayer à valeurs discrètes en temps l'intensité b) balayer à valeurs discrètes en temps l'intensité lumineuse reçue sur le lieu et à la cadence de balayage mémoriser en continu les valeurs de balayage par une fenêtre de temps de mesure (13) présélectionnée incluant au moins l'instant de réception de l'impulsion lumineuse réfléchie par l'objet, en tant que série de valeurs de balayage de signaux de réception,
c) répétition N-fois des étapes a) et b) pour obtenir N séries de valeurs de balayage de signaux de réception mémorisées,
d) ajouter les N séries de valeurs de balayage de signaux de réception mémorisées par valeurs de balayage, toutefois plus lentement que dans la cadence de la fréquence de balayage, à une série de valeurs de balayage totalisées pendant une fenêtre de temps de calcul (14) consécutive aux N fenêtres de temps de mesure (13),
e) répéter les étapes a) à d) pour obtenir une autre série de valeurs de balayage totalisées,
moyennant quoi pendant ou après l'étape d) l'autre série de valeurs de balayage totalisées est ajoutée par valeurs de balayage à la série de valeurs de balayage totalisées existante, toutefois plus lentement que dans la cadence de la fréquence de balayage pour actualiser cette dernière,
et une portion égale éventuelle d'une série de valeurs de balayage totalisées étant soustraite de celle-ci avant et/ou après l'addition citée,
f) rechercher dans la série de valeurs de balayage totalisée les valeurs de balayage plus significatives répondant à un critère de valeur seuil pré-établi,
g) répéter autant de fois que cela est nécessaire les étapes e) et f) jusqu'à ce que l'on trouve des valeurs de balayage significatives, et
h) déterminer la distance recherchée à partir de la position des valeurs de balayage significatives trouvées dans la série des valeurs de balayage totalisées.

2. Procédé selon la revendication 1, **caractérisé en ce que** la fenêtre de temps de calcul (14) est égale à 4 fois jusqu'à 16 fois, de préférence sensiblement 8 jusqu'à 10 fois N fenêtres de temps de mesure (13).

3. Procédé selon la revendication 1 ou 2, **caractérisé en ce que** dans l'étape h) en tant que position on utilise le centre de gravité des valeurs de balayage significatives.

4. Procédé selon l'une des revendications 1 à 3, **caractérisé en ce que** dans les étapes f) à h) avec plusieurs groupes distants entre eux de valeurs de balayage significatives on ne prend pas en considération un premier groupe qui est nettement plus large que le groupe suivant.

5. Procédé selon l'une des revendications 1 à 4, **caractérisé en ce que** dans les étapes f) à h) pour plusieurs groupes distants entre eux de valeurs de balayage significatives, on ne prend pas en considération le(s) dernier(s) groupe(s).
